Europäisches Patentamt

European Patent Office

Office européen des brevets

(19)

(11) Veröffentlichungsnummer: **0 170 217**
A2

(12) **EUROPÄISCHE PATENTANMELDUNG**

(21) Anmeldenummer: 85109370.8

(22) Anmeldetag: 25.07.85

(51) Int. Cl.⁴: **G 01 N 19/10**
A 01 G 25/00, A 01 G 27/00

(30) Priorität: 02.08.84 DE 3428508

(43) Veröffentlichungstag der Anmeldung:
05.02.86 Patentblatt 86/6

(84) Benannte Vertragsstaaten:
AT BE CH DE FR GB IT LI NL SE

(71) Anmelder: GARDENA Kress + Kastner GmbH
Lichternseestrasse 40 Postfach 27 47
D-7900 Ulm (Donau)(DE)

(72) Erfinder:
Die Erfinder haben auf ihre Nennung verzichtet

(74) Vertreter: Patentanwälte Ruff und Beier
Neckarstrasse 50
D-7000 Stuttgart 1(DE)

(54) **Feuchte-Messgerät.**

(57) Ein Gerät zur Messung der Bodenfeuchtigkeit und zum Auslösen eines feuchtigkeitsabhängigen Vorganges enthält in einem Gehäuse einen Quellkörper (35), der bei Feuchtigkeitsänderung seine Länge ändert. Der Quellkörper (35) wirkt auf einen verschiebbaren Schieber (41) ein, der mit einer Zahnstange (54) versehen ist. Die Zahnstange (54) kämmt mit einem Zahnkranz (53) eines Anzeigelementes (17), das ein Kontaktelement (71) aufweist. Eine Längenänderung des Quellkörpers (35) führt zu einer Verdrehung des Anzeigeelementes (17) und zum Schließen eines Kontaktes bei einer bestimmten veränderbaren Winkelstellung.

FIG.5

Anmelderin: GARDENA Kress + Kastner GmbH
Lichternseestraße 40
7900 Ulm/Donau

Feuchte-Meßgerät

Die Erfindung betrifft ein Gerät zum Messen der Bodenfeuchtigkeit und zum Auslösen eines feuchtigkeitsabhängigen Schaltvorgangs.

Geräte dieser Art werden beispielsweise dazu verwendet, automatische Bewässerungsanlagen in Gang zu setzen oder stillzulegen. Es hat sich als sinnvoll herausgestellt, Bewässerungsanlagen nicht rein zeitabhängig zu schalten, sondern in Abhängigkeit von der tatsächlichen Bodenfeuchtigkeit zu betreiben. Zu diesem Zweck ist es bereits bekannt, Geräte zu verwenden, die eine Widerstandsmessung des Bodens durchführen. Ebenfalls bekannt sind Tensiometer und die Stromerzeugung eines aus zwei Metallen bestehenden elektrischen Elementes.

Der Erfindung liegt die Aufgabe zugrunde, einen Feuchtefühler zu schaffen, der bei möglichst einfachem und robustem Aufbau ohne äußere Hilfsquellen auskommt und dennoch sehr zuverlässig arbeitet. Er soll in der Lage sein, die tatsächlichen Feuchtigkeitsverhältnisse exakt an ein anzuschließendes Beregnungsgerät zu melden.

Zur Lösung dieser Aufgabe ist erfindungsgemäß vorgesehen, daß in einem mit dem Erdboden verbindbaren Gehäuse ein der Bodenfeuchtigkeit durch mindestens eine Öffnung und/oder dem Niederschlag ausgesetzter Meßkörper, insbesondere ein Quellkörper, angeordnet ist, der mit einem Kontaktelement zum Schließen eines elektrischen Kontaktes bei einer bestimmten feuchtigkeitsabhängigen Formveränderung sowie ggf. mit einem Anzeigeelement verbunden ist. Die Erfindung macht sich die Erkenntnis zunutze, daß bestimmte Stoffe in Abhängigkeit von ihrem Feuchtigkeitsgehalt ihrer Eigenschaften, beispielsweise ihr Volumen oder ihre Form, ändern. Diese Änderung wird in eine mechanische Bewegung zum Schließen eines elektrischen Kontaktes umgesetzt. Dadurch, daß der Meßkörper in einem Gehäuse angeordnet ist, wird sichergestellt, daß nicht einige ihn zufällig treffende Wassertropfen ihn bereits zur Meldung einer hohen Feuchtigkeit veranlassen. Vielmehr muß die Bodenfeuchtigkeit durch eine Öffnung in das Gehäuse und von dort zu dem Meßkörper gelangen, so daß durch die spezielle Anordnung der Öffnung dem Fachmann ausreichend Gelegenheit gegeben ist, die Art und Schnelligkeit des Eindringens der Feuchtigkeit zu regulieren. Andererseits ist der Meßkörper auch dem Niederschlag ausgesetzt, so daß bei auftretendem Regen nicht erst gewartet werden muß, bis der Regen über den Umweg einer Erhöhung der Feuchtigkeit des Erdbodens angezeigt wird.

Damit das Gehäuse besser mit dem Erdboden verbindbar ist, schlägt die Erfindung vor, daß es einen keilartigen Ansatz zum Einstecken in den Erdboden aufweisen kann. Damit läßt sich nicht nur eine sichere mechanische Verbindung des Gehäuses mit dem Erdboden erreichen, vielmehr ist auch eine bessere Ankopplung zu einer etwas tieferen Erdschicht und eine Vergrößerung der Öffnung zum Eintreten der Feuchtigkeit möglich.

In Weiterbildung kann vorgesehen sein, daß das Gehäuse an seiner Unterseite einen nach unten gerichteten umlaufenden Rand aufweist. Dadurch wird die Unterseite des Gehäuses nach außen hin abgedeckt, so daß unmittelbar unter dem Gehäuse ein Verhalten wie in einer tiefer liegenden Wurzelschicht simuliert wird. Während es einige Zeit dauert, bis Wasser von der Oberseite des Erdbodens bis zu den Wurzeln gelangt, so dauert es auch bei dieser Gehäuseausbildung einige Zeit, bis die Feuchtigkeit in den Bereich unter dem Gehäuse gelangt. Andererseits ist der Erdbereich unter dem Gehäuse gegen ein vorschnelles Austrocknen aufgrund einer Oberflächenverdunstung geschützt. Dadurch wird durch diese Ausbildung das Feuchtigkeitsverhalten im Wurzelwerk, das ja mit Feuchtigkeit versorgt werden soll, besonders gut simuliert.

Damit bei einer Verringerung der Feuchtigkeit auch der Meßkörper in dem Gehäuse seine Feuchtigkeit wieder abgeben kann, kann vorgesehen sein, daß das Gehäuse Lüftungsöffnungen aufweist. Diese Lüftungsöffnungen können mit Vorteil derart ausgebildet sein, daß sie eine Labyrinthdichtung bilden, damit keine Insekten in das Gehäuse einkriechen können. Zu diesem Zweck kann das Gehäuse zweiteilig ausgebildet sein, wobei der Rand des Unterteils mit einem Kranz von Vertiefungen und Erhöhungen ausgestattet sein kann, auf die der glatte Rand des Gehäuseoberteils übergestülpt wird. Diese Vertiefungen und Erhöhungen können in Art eines Zackenkranzes ausgebildet sein.

Besonders günstig ist es, wenn die Feuchtigkeitsdurchtrittsöffnung an einer Flachseite des Keilansatzes angeordnet
ist. Dies führt nicht nur dazu, daß die Eintrittsöffnung
relativ großflächig ausgebildet sein kann, es führt weiterhin auch dazu, daß diese Öffnung besonders gut in Kontakt
mit dem Erdboden steht, da der Keil ja in den Erdboden eingeschoben wird. Die Wasserdurchtrittsöffnung kann beispielsweise aus vielen kleinen nebeneinander angeordneten Löchern
bestehen, sie kann kann jedoch auch aus einer großen Öffnung bestehen, in die eine Art Filter eingesetzt ist. Dieses Filter wiederum kann als geschlossene Platte aus einem
feuchtigkeitsleitenden Material, beispielsweise mit Vorteil
Keramik, oder als feinmaschiges Sieb ausgebildet sein.
Dieses Sieb kann einstückig mit dem Ansatz ausgebildet
sein. Die großflächige Anlage der Feuchtigkeitsdurchtrittsöffnung hat natürlich auch den Vorteil, daß bei Verringerung der Feuchtigkeit diese auch wieder leicht an den Erdboden abgegeben wird. Das Filter dient zum Schutz des Gerätes vor Verschmutzungen.

Das Feuchtigkeitsmeßgerät nach der Erfindung kann mit besonderem Vorteil auch bei Tropfbewässerungen angewendet
werden. Bei Tropfbewässerungen wird das Wasser direkt an
den Stellen, an denen es gebraucht wird, langsam in den
Erdboden eingetropft. Zu diesem Zweck sind einzelne Tropfventile mit Schläuchen verbunden, aus denen das Wasser langsam austropft. Das Wasser dehnt sich bei Tropfbewässerungen im Boden in einem zwiebelförmigen Querschnitt aus. Bei
bisherigen Geräten war es nicht möglich, diese Feuchtigkeit
exakt zu messen. Daher schlägt die Erfindung in weiterer
Ausgestaltung vor, daß das Gehäuse des Feuchtigkeitsmeßgerätes eine Halterung für eine Tropfbewässerung aufweist.
Die Tropfbewässerung führt zu einer Verteilung der Feuchtigkeit im Boden direkt neben dem Meßgerät, wie es bei einer
Pflanze der Fall ist. Zu diesem Zweck kann das Gehäuse beispielsweise eine Klemmvorrichtung für einen Tropfschlauch
enthalten, wobei das Tropfventil in eine Mulde o.dgl. im
Gehäuse tropft, von wo aus das Wasser über den Rand des
Gehäuses in den Erdboden sickert. Aufgrund dieser Mulde
bzw. kugelförmigen Vertiefung können beliebige Tropfer verwendet werden, da das Wasser aus der Mulde immer auf dem
gleichen Weg über den Rand des Gehäuses rinnt.

Als Meßkörper werden mit Vorteil derartige Gegenstände verwendet, die aufgrund von aufgenommener Feuchtigkeit eine
Volumenänderung erfahren. Zu diesen Stoffen gehören beispielsweise bestimmte Kunststoffe, aber auch natürliche
Stoffe können verwendet werden. Es hat sich nun herausgestellt, daß bei bestimmten Stoffen Volumen- oder Längenänderungen nur in einem bestimmten Feuchtigkeitsbereich stattfinden. Um nun eine Begrenzung der Feuchtigkeitssättigung
des Quellkörpers zu erreichen, kann in Weiterbildung der
Erfindung vorgesehen sein, daß zwischen der Öffnung zum
Durchtreten der Feuchtigkeit und dem Meßkörper ein Vlies
angeordnet ist. Dieses Vlies besteht insbesondere aus Kunststoff. Es dient einerseits dazu, aufgrund seiner Kapillarwirkung die Feuchtigkeit aus der Öffnung direkt aufzunehmen
und zu dem Meßkörper zu leiten. Andererseits dient es, wie
bereits erwähnt, dazu, zu gewährleisten, daß der Meßkörper
beispielsweise nur auf 30 oder 40 % Sättigung gebracht wird.
Beispielsweise kann mit Vorteil der Quellkörper stabförmig
ausgebildet sein, in welchem Fall das Vlies um ihn herum
gewickelt wird. Dabei kann man, zur Verringerung der Feuchtigkeitssättigung, das Vlies nur über einen bestimmten Teil
der Länge des Stabes wickeln.

Die Erfindung schlägt weiterhin vor, daß das Vlies in den keilförmigen Ansatz hineingeführt und dort hinter der Öffnung angeordnet sein kann. Das Vlies bildet also eine Feuchtigkeitsleitung von der Feuchtigkeitsöffnung zu dem Quellkörper. Dabei wird es durch das Filter bzw. das Sieb ausreichend geschützt.

Bei einem stabförmig ausgebildeten Quellkörper wirkt sich die Volumenänderung in erster Linie als eine Längenänderung aus. Es ist daher besonders günstig, den Quellkörper auf einen federbeaufschlagten Schieber einwirken zu lassen, der mit einem ggf. einen Zeiger enthaltenden Anzeigeelement getrieblich verbunden ist. Dieses Anzeigeelement zeigt durch seine Stellung die tatsächlich vorhandene Feuchtigkeit an, auch wenn es keinen Zeiger enthält und von außen auch nicht ablesbar ist. Zur Auslösung des auszulösenden Schaltvorganges weist das Anzeigeelement mit Vorteil ein Kontaktelement auf. Das Kontaktelement kann beispielsweise gegen einen festen metallischen oder metallbelegten Anschlag bewegt werden, so daß immer bei einer festen vorbestimmten Feuchtigkeit ein Kontakt geschlossen wird.

Besonders günstig ist es jedoch, wenn das Anzeigeelement sich gegenüber einem manuell verstellbaren Einstellelement mit einem Gegenkontakt bewegt. In diesem Fall kann durch manuelles Verstellen des Einstellelementes ausgewählt werden, bei welcher Feuchtigkeit ein Vorgang ausgelöst werden soll.

Die Bewegung, die der Schieber ausführt, ist eine lineare Bewegung. Dementsprechend kann auch das Anzeigeelement bzw. der Zeiger und das Einstellelement sich linear bewegen. Zur Verbesserung der Einstellmöglichkeit und ggf. der Ablesemöglichkeit kann längs des Bewegungsweges der beiden Elemente eine Skala angebracht sein.

Besonders günstig ist es jedoch, wenn der Schieber über eine Zahnstange das mit einem Zahnkranz versehene drehbar gelagerte Anzeigeelement bewegt. Dadurch läßt sich die lineare Bewegung des Schiebers in eine Drehbewegung des Anzeigeelementes umsetzen, wodurch es auch möglich wird, das Einstellelement ebenfalls drehbar auszubilden.

In Weiterbildung der Erfindung kann vorgesehen sein, daß das Gehäuse einen Sammelbehälter für Niederschlag aufweist, aus dem ein Überlauf in den Bereich des Meßkörpers, vorzugsweise jedoch des Vlieses führt. Dieser Sammelbehälter kann mit einem Sieb abgedeckt sein, so daß kein Schmutz in ihn hineingelangt. Es muß sich erst eine bestimmte Menge Niederschlag in dem Sammelbehälter ansammeln, bevor das Wasser aus dem Überlauf ausläuft und den Meßkörper beeinflussen kann. Damit soll sichergestellt werden, daß beispielsweise bei einer Rasenberegnungsanlage, bei der das Feuchte-Meßgerät im Bereich des Regners angeordnet ist, nicht schon nach den ersten Minuten ein Abschalten erfolgt. Der Überlauf simuliert wiederum das langsamere Einsickern des Regens bzw. Wassers in den Erdboden. Der Überlauf führt mit Vorteil nicht direkt zum Meßkörper, sondern in den Bereich des Vlieses, so daß die Einflüsse der Bodenfeuchtigkeit und der Niederschlagsfeuchtigkeit sich summieren und auf dem gleichen Wege zu dem Meßkörper gelangen.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1   eine Aufsicht auf ein Gerät zum Messen der
         Bodenfeuchtigkeit nach der Erfindung;

Fig. 2   einen Längsschnitt etwa nach Linie II-II in
         Fig. 1;

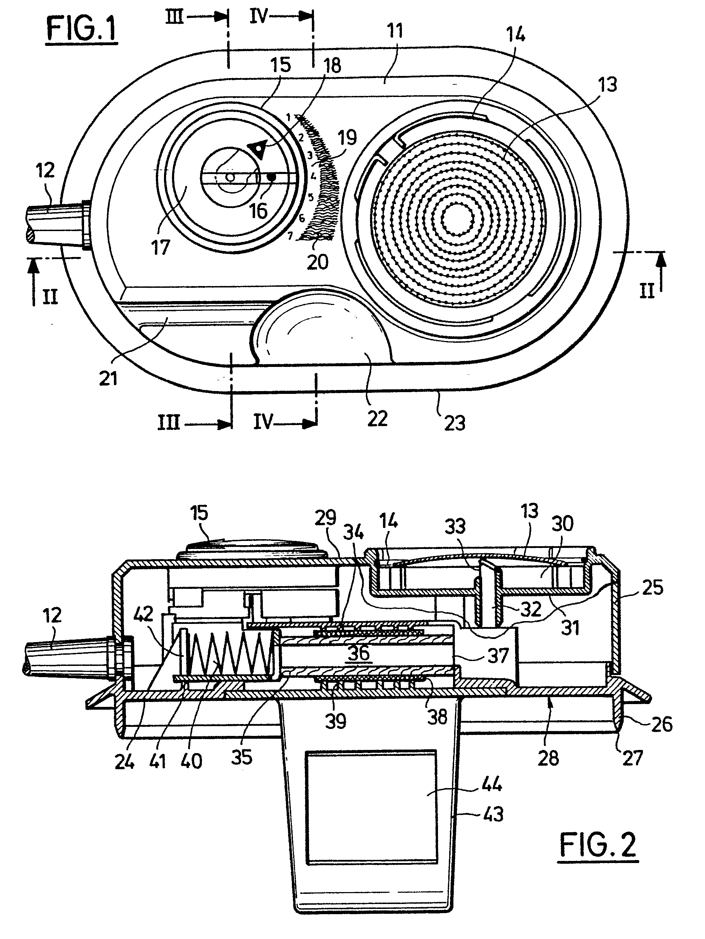

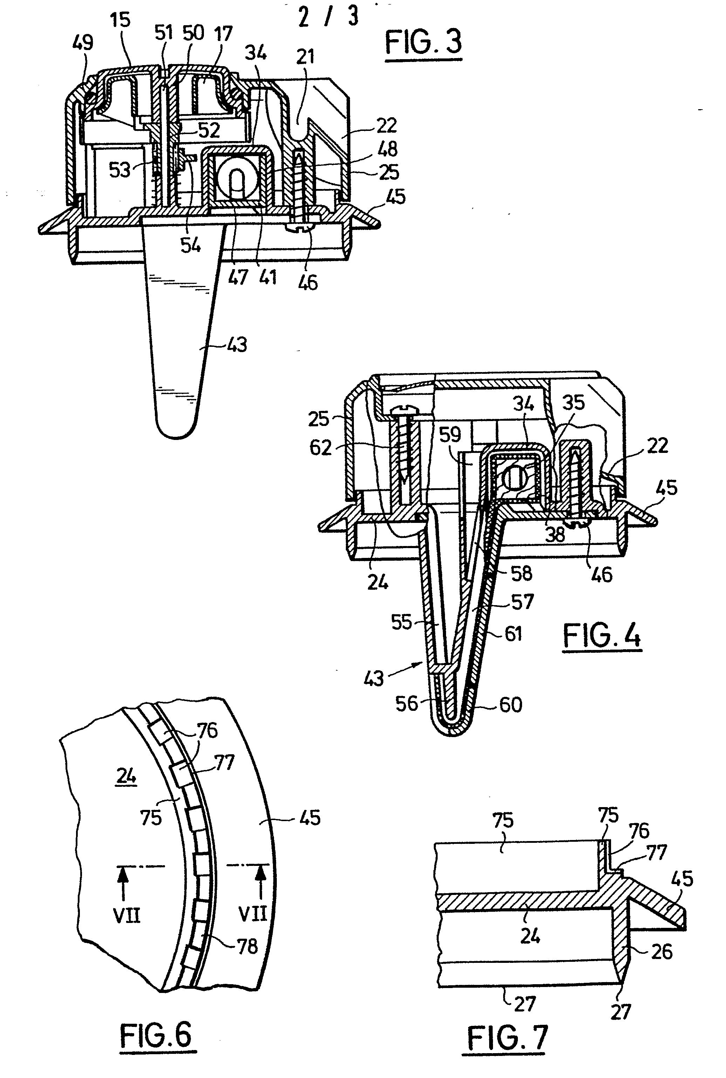

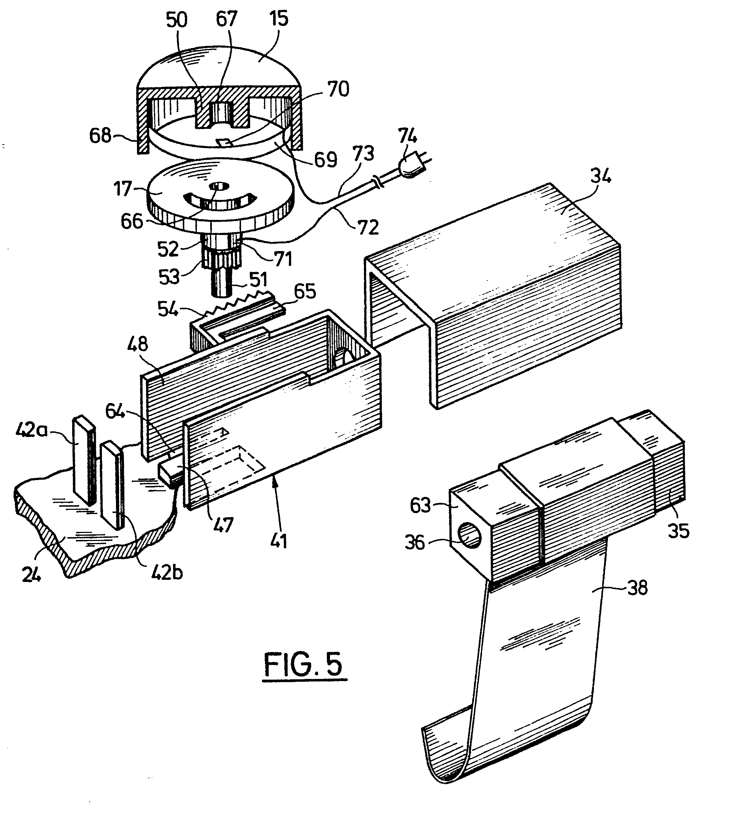

Fig. 3   einen Querschnitt durch das Gerät nach Fig. 1;

Fig. 4   einen weiteren Querschnitt durch die Anordnung
         in Fig. 1 längs Linie IV-IV in Fig. 1;

Fig. 5   eine schematische Explosionsdarstellung;

Fig. 6   in vergrößertem Maßstab die Aufsicht auf den
         Rand des Unterteils des Gehäuses;

Fig. 7   einen Schnitt durch die Anordnung in Fig. 6.

Fig. 1 zeigt eine Aufsicht auf das Gehäuse 11 des Feuchtigkeitsfühlers. Es besitzt eine etwa ovale Form. Links in
Fig. 1 ist am Gehäuse 11 eine nur angedeutete Leitung 12
angebracht. Mit dieser Leitung wird der Feuchtigkeitsfühler beispielsweise an einem automatischen Beregnungsgerät
angeschlossen. Auf seiner Oberseite enthält das Gehäuse
11 eine kreisförmige mit Löchern versehene Abdeckplatte
13, durch die Wasser von oben in einen darunter angeordneten Behälter gelangen kann. Die Abdeckplatte 13 ist mit
einem Sicherungsring 14 im Gehäuse 11 befestigt.

Zwischen der Abdeckplatte 13 und der Leitung 12 ist ein drehbares Einstellelement 15 mit einer kreisrunden transparenten
Scheibe mit einer aufgebrachten Punktmarkierung 16 angeordnet.
Durch die durchsichtige Einstellscheibe ist die Oberseite eines Anzeigeelementes 17 sichtbar, das einen Zeiger 18 aufweist. Auch das Anzeigeelement 17 ist drehbar, und zwar um die gleiche Achse wie das Einstellelement 15.

Außerhalb des Randes beider Elemente 15, 17 ist eine Skala 19 angeordnet, die Zahlen von 1 bis 7 enthält. Neben der Skala 19 ist eine keilartige Markierung 20 angebracht, die zur Ergänzung der Skala 19 dient. Es ist zu sehen, daß das Einstellelement zwischen den Werten 1 und 7 der Skala verstellt werden kann, wobei 1 die Stellung minimaler Feuchtigkeit und 7 die Stellung maximaler Feuchtigkeit bedeutet.

Neben dem Einstellelement 15 ist eine langgestreckte Rinne 21 in der Oberseite des Gehäuses 11 ausgebildet, die vom Rand des Gehäuses 11 zu einer etwa kugelförmig ausgebildeten Mulde 22 führt. Die Mulde 22 enthält ihre tiefste Stelle etwa in der Mitte der Längsseite 23 des Gehäuses 11, so daß Wasser aus der Mulde 20 über den Rand des Gehäuses 11 in den Erdboden abfließen kann. Die Rinne 21 dient dazu, den Schlauch einer Tropfbewässerung aufzunehmen, während das Tropfventil selbst so angeordnet ist, daß die aus ihm austretenden Wassertropfen in die Mulde 22 gelangen.

Fig. 2 zeigt einen Längsschnitt durch das Gehäuse 11. Das Gehäuse enthält einen Gehäuseboden 24, auf dem das Gehäuseoberteil 25 haubenartig aufgesetzt ist. Die Leitung 12 ist an der Schnittstelle zwischen Gehäuseboden 24 und Gehäuseoberteil 25 angeordnet. Der Gehäuseboden 24 weist auf seiner Unterseite einen längs des Umfangs umlaufenden nach unten gerichteten Rand 26 auf, der zwischen sich einen Hohlraum stehen läßt. Die Unterkante 27 des Randes 26 ist leicht keilförmig ausgebildet, so daß sich das Einsetzen des Gehäuses 11 in den Erdboden und das Eindringen des Randes 26 leichter durchführen läßt. Das Gerät wird soweit in den Erdboden eingesetzt, bis der Erdboden an der flachen Unterseite 28 des Bodens 24 anliegt.

Das Einstellelement 15 ragt leicht aus der Oberseite 29 des Gehäuseoberteils 25 heraus. Unterhalb der leicht nach oben konvex gebogenen Abdeckplatte 13 ist der etwa kreisförmige Behälter 30 für von oben auftretenden Niederschlag zu sehen, dessen Boden 31 etwa in seiner Mitte von einem kurzen Rohrstück 32 durchsetzt wird. Das Rohrstück 32 ragt in den Behälter 30 bis fast zu der Abdeckplatte 13 hinein und enthält dort eine seitlich angeordnete Öffnung 33. Diese Öffnung 33 bildet einen Überlauf, aus dem Wasser aus dem Behälter 30 abfließen kann, sobald es eine bestimmte Höhe in diesem erreicht hat.

Etwa in der Mitte der Längsrichtung ist in dem Gehäuse 11 ein Tunnel 34 ausgebildet, der an seiner in Fig. 2 rechten Seite abgeschlossen ist. In dem Tunnel ist ein stabförmiger Quellkörper 35 angeordnet, der eine zentrale Längsbohrung 36 aufweist. Der Quellkörper 35 besteht aus einem Material, dessen Länge feuchtigkeitsabhängig ist. Im bevorzugten Ausführungsbeispiel der Erfindung besteht der Quellkörper 35 aus Holz und zwar aus Buchenholz, das tangential zu den Jahresringen entnommen ist. Dies führt dazu, daß die Volumenvergrößerung bei zunehmender Feuchtigkeit im wesentlichen zu einer Längenänderung führt, die bei dem Gerät nach der Erfindung besonders einfach ausgenutzt werden kann. Das eine, in Fig. 2 rechte Ende des Quellkörpers 35 liegt an einem Anschlag 37 an. Um den Quellkörper 35 herum ist eine Lage eines Vlieses 38 angeordnet, das von mehreren Rippen 39 an der Innenseite des Tunnels 34 gegen den Quellkörper 35 gedrückt wird.

Von links her wird gegen das freie Ende des Quellkörpers 35 von einer Druckfeder 40 ein Schieber 41 angedrückt. Die Druckfeder 40 stützt sich an einem mit dem Gehäuseboden 24 einstückig verbundenen Widerlager 42 ab. Eine aufgrund unterschiedlicher Feuchtigkeit bewirkte Längenänderung des Quellkörpers 35 führt daher zu einer Längsverschiebung des Schiebers 41.

Auf der Unterseite des Gehäusebodens 24 ist ein Ansatz 43 angeordnet, der bei auf den Erdboden aufgesetzen Feuchtigkeitsmeßgerät tief in den Erdboden eindringt. Der Ansatz 43 enthält eine Öffnung 44, in der ein Filter eingesetzt sein kann und durch die die Feuchtigkeit in das Innere des Gerätes eindringen und auch aus dem Gerät wieder austreten kann.

In dem Schnitt in Fig. 3 ist die Anordnung der Rinne 21 und der daran sich anschließenden Mulde 22 deutlich zu sehen. Das aus der Mulde 22 heraustropfende Wasser fließt über einen flanschartigen Ansatz 45, der unter einem Winkel von etwa 30° gegenüber der Horizontalen verläuft, nach unten und gelangt dort in das Erdreich.

Der in dem Tunnel 34 angeordnete Schieber 41 enthält eine Bodenplatte 47 und zwei Seitenwände 48. Mit Hilfe der Seitenwände 48 und der Bodenwand 47 ist der Schieber 41 in dem Tunnel 34 geführt.

An der linken Seite in Fig. 3 ist das Einstellelement 15 zu sehen, das eine etwa haubenartige Form aufweist. Im Randbereich ist das Einstellelement 15 mit Hilfe einer Dichtung 49, beispielsweise eines O-Rings, gegenüber dem Gehäuse- oberteil 25 abgedichtet. Das Einstellelement 15 hat an seiner Unterseite einen Ansatz 50, der eine Längsbohrung aufweist, in der eine Achse 51 angeordnet ist.

Unmittelbar innerhalb des haubenförmigen Einstellelementes
15 ist das Anzeigeelement 17 zu sehen, das auf der gleichen
Achse 51 drehbar gelagert ist wie das Einstellelement 15.
Das Anzeigeelement 17 weist einstückig eine Nabe 52 mit
einem daran angeformten Zahnkranz 53 auf. Mit dem Zahnkranz
53 kämmt eine Zahnstange 54, die mit dem Schieber 51 verbunden ist, was später noch gezeigt werden wird.

Die Keilform des Ansatzes 43 geht aus Fig. 3 ebenfalls deutlich hervor, wobei die Spitze des Keilansatzes 43 abgerundet ist.

Fig. 4 zeigt einen ähnlichen Schnitt durch das Feuchtigkeitsmeßgerät nach der Erfindung wie Fig. 3. Aus diesem Schnitt
geht die Anordnung und der Aufbau des Ansatzes 43 hervor.
Der Ansatz 43 enthält ein Basisteil 55, das einstückig mit
dem Gehäuseboden 24 ausgebildet ist. Dieses Basisteil besitzt ebenfalls etwa Keilform, es weist an seiner Unterseite eine nach unten gerichtete Rippe 56 auf. Im Bereich
der in Fig. 4 rechten Keilfläche enthält das Basisteil 55
mehrere von oben nach unten verlaufende Rippen 57, die bis
zum Ende der Rippe 56 reichen. Zwischen den Rippen 57 ist
eine Öffnung 58 ausgebildet, die nach oben in einen Kanal
59 führt. Der Kanal 59 ist direkt unterhalb des in Fig. 2
zu sehenden Rohrstückes 32 angeordnet, so daß Flüssigkeit
aus dem Behälter 30 für den Niederschlag durch das Rohrstück 32 und die Öffnung 58 in den Bereich des Ansatzes
43 fließen kann.

An dem Basisteil 55 des Ansatzes 43 ist eine Abdeckplatte
60 angeordnet, die mit ihrer U-förmig ausgebildeten Unterseite hinter die Rippe 56 des Basisteils 55 greift und in ihrem oberen Bereich mit Hilfe der Schraube 46 am Gehäuseboden 24 festgeschraubt ist. In diesem Bereich verläuft die Abdeckplatte 60 parallel zur Unterseite des Gehäusebodens 24 und bildet dort die Unterseite des Tunnels 34. In diesem Tunnel 34 ist der Quellkörper 35 angeordnet, um den das Vlies 38 einmal herumgeschlungen ist. Das Vlies 38 verläuft dann nach unten in den Ansatz 43 hinein und wird von den Rippen 57 gegen die Innenseite der Abdeckplatte 60 angedrückt. Die Abdeckplatte 60 weist im Bereich der in Fig. 2 zu sehenden Öffnung 44 einen Filtereinsatz 61 auf. Dieser Filtereinsatz kann beispielsweise aus Keramik bestehen und dient dazu, das Vlies 38 mechanisch zu schützen und eine Verstopfung zu verhindern.

Aus der linken Hälfte der Fig. 4 ergibt sich, daß das Gehäuseoberteil 25 ebenfalls mit Hilfe von Schrauben 62 an dem Gehäuseboden 24 angeschraubt ist.

Fig. 5 zeigt nun perspektivisch in vereinfachter Darstellung eine Explosionsdarstellung der wichtigsten Teile der Vorrichtung nach der Erfindung. Der Tunnel 34 zur Beherbergung des Quellkörpers 35 ist nach unten offen gezeichnet, da die Unterseite dieses Tunnels Teil der Abdeckplatte 60 des Ansatzes 43 ist. In den Tunnel 34 wird eingesetzt der Quellkörper 35 mit der Längsbohrung 36, wobei um den Quellkörper 35 das Vlies 38 herumgeführt ist. Das Vlies 38 erstreckt sich dann nach unten und ist so lang, daß es um die untere Rippe 56 des Basisteils 55 des Ansatzes 43 herumgeführt werden kann.

Von links wird das freie Ende 63 des Quellkörpers 35 von dem Schieber 41 beaufschlagt, in dessen Innenraum die in Fig. 2 dargestellte Druckfeder 40 angeordnet ist, die sich
an dem Widerlager 42 am Gehäuseboden 24 abstützt. Zur besseren Führung des Schiebers 41 weist dessen Boden 47 zwei
Einschnitte 64 auf, die etwa der Breite der beiden Teile
42a, 42b des Widerlagers 42 entsprechen. Dadurch kann der
Schieber 41 über das Widerlager 42 hinaus bewegt werden.
An seiner in Fig. 5 hinteren Seitenwand 48 enthält der Schieber 41 einen etwa L-förmigen Ansatz 65, an dessen Außenseite
die Zahnstange 54 einstückig angeformt ist. Die Zahnstange
54, die sich bei Längsbewegung des Schiebers 41 mitbewegt,
kämmt mit dem Zahnkranz 53 an der Nabe 52 des Anzeigeelementes 17, das in Fig. 5 vereinfacht als Scheibe dargestellt
ist. Das Anzeigeelement 17 ist drehbar um die ortsfest angeordnete Achse 51 angeordnet, wobei es eine durchgehende
Längsbohrung 66 aufweist, durch die sich die Drehachse 51
erstreckt. Die Drehachse 51 greift dann in eine Bohrung
67 des Ansatzes 50 des vereinfacht dargestellten Einstellelementes ein. Das haubenförmige Einstellelement 15 greift
mit seinem Rand 68 in zusammengesetztem Zustand bis unter
die Scheibe des Anzeigeelementes 17. Zwischen dem Rand 68
des Einstellelementes 15 ist eine aus Metall bestehende
federnde Zunge 69 eingesetzt, die einen radial nach innen
gerichteten Ansatz 70 aufweist. Dieser Ansatz 70 liegt auf
der Nabe 52 des Anzeigeelementes 17 auf. Ein Teil des Umfangs des Nabenelementes 52 ist mit einem aus Metall bestehenden Kontaktelement 71 versehen, an das eine Leitung 72
angelötet ist. Die zweite Leitung 73 ist an der metallischen
Zunge 69 angelötet, die den Gegenkontakt bildet. Verdreht
sich nun das Anzeigeelement 17 gegenüber dem feststehenden
Einstellelement 15, so gelangt bei einer bestimmten Winkelstellung der Ansatz 70 der Zunge 69 in Kontakt mit dem metallischen Kontaktelement 71 an der Nabe 52, so daß ein Stromkreis durch die Leitungen 72 und 73 geschlossen wird. Die Leitungen 72 und 73 sind mit einem Stecker 74 verbunden.
Bei Weiterdrehung bleibt der Stromkreis geschlossen, während
bei Drehung in umgekehrter Drehrichtung der Stromkreis wieder
geöffnet wird. Dadurch wird ein einfacher Schalter verwirklicht.

Fig. 6 zeigt eine Aufsicht in vergrößertem Maßstab auf den
Rand des Gehäusebodens 24 mit dem flanschartigen Ansatz
45 an der Außenseite. Der Gehäuseboden weist einen kurzen
nach oben gerichteten Flansch 75 auf, in den von der Außenseite einzelne Vertiefungen 76 eingebracht sind. In Übereinstimmung mit den Vertiefungen 76 im Flansch 75 sind ebenfalls Vertiefungen 77 in einer horizontalen Schulter 78
des Flansches 75 angeordnet, siehe auch Fig. 7. Fig. 7 zeigt
einen Schnitt durch den Flansch 75. Die Vertiefungen 76
und 77 sind relativ klein ausgeführt. Wird nun auf den Gehäuseboden 24 das Oberteil 25 aufgesetzt, so liegt dessen
Rand auf den neben den Vertiefungen 76 und 77 stehenbleibenden Teilen des Flansches 75 auf, so daß die Vertiefungen
76 und 77 jeweils einen Durchgang mit kleinem Querschnitt
ergeben, durch den keine Insekten in das Innere des Gehäuses
11 eindringen können, die aber eine Belüftung des Innenraumes des Gehäuses 11 gewährleisten. Dadurch kann die im Inneren des Gehäuses enthaltene Feuchtigkeit auch wieder an
die Luft abgegeben werden.

Anmelderin:        GARDENA Kress + Kastner GmbH
Lichternseestraße 40
7900 Ulm(Donau)


Feuchte-Meßgerät


A n s p r ü c h e


1.  Gerät zum Messen der Bodenfeuchtigkeit und zum Auslösen
eines feuchtigkeitsabhängigen Vorgangs, dadurch gekennzeichnet, daß in einem mit dem Erdboden verbindbaren Gehäuse (11) ein der Bodenfeuchtigkeit durch mindestens
eine Öffnung (44) und/oder dem Niederschlag ausgesetzter
Meßkörper, insbesondere ein Quellkörper (35), angeordnet
ist, der mit einem Kontaktelement (71) zum Schließen eines elektrischen Kontaktes bei einer bestimmten feuchtigkeitsabhängigen Zustandsänderung, insbesondere einer Formänderung, sowie ggf. einem Anzeigeelement (17) verbunden
ist.


2.  Gerät nach Anspruch 1, dadurch gekennzeichnet, daß das
Gehäuse (11) einen keilartigen Ansatz (43) zum Einstecken
in den Erdboden und/oder an seiner Unterseite (28) einen
nach unten gerichteten umlaufenden Rand (26) aufweist.


3.  Gerät nach einem der vorhergehenden Ansprüche, dadurch
gekennzeichnet, daß das Gehäuse (11) Lüftungsöffnungen
aufweist.

4. Gerät nach einem der Ansprüche 2 bis 3, dadurch gekennzeichnet, daß die Wasserdurchtrittsöffnung (44) an einer Flachseite des Keilansatzes (43) angeordnet ist und dieser vorzugsweise ein Filter (61) aufweist.

5. Gerät nach einem der vorhergehenden Ansprüche, dadurch gekennzeichnet, daß das Gehäuse (11) eine Halterung für eine Topfbewässerung aufweist.

6. Gerät nach einem der vorhergehenden Ansprüche, dadurch gekennzeichnet, daß zwischen der Öffnung (44) zum Durchtreten der Feuchtigkeit und dem Meßkörper (35) ein diesen mindestens teilweise umgebendes Vlies (38) angeordnet ist.

7. Gerät nach einem der vorhergehenden Ansprüche, dadurch gekennzeichnet, daß der stabförmig ausgebildete, vorzugsweise mit einem Vlies (38) mindestens teilweise umwickelte Quellkörper (35) bei Feuchtigkeitsänderung eine Längenänderung durchführt.

8. Gerät nach Anspruch 6 oder 7, dadurch gekennzeichnet, daß das Vlies (38) in den Ansatz (43) eingeführt und dort hinter der Öffnung (44) angeordnet ist.

9. Gerät nach einem der vorhergehenden Ansprüche, dadurch gekennzeichnet, daß der Quellkörper (35) auf einen federbeaufschlagten Schieber (41) einwirkt, der mit einem ggf. einen Zeiger (18) enthaltenden Anzeigeelement (17) getrieblich verbunden ist, wobei vorzugsweise der Schieber (41) eine Zahnstange (54) aufweist, die mit einem Zahnkranz (53) des drehbar gelagerten Anzeigeelements (17) kämmt.

10. Gerät nach einem der vorhergehenden Ansprüche, dadurch gekennzeichnet, daß das Anzeigeelement (17) ein Kontaktelement (71) aufweist und sich vorzugsweise gegenüber einem manuell verstellbaren Einstellelement (15) mit einem Gegenkontakt bewegt.

11. Gerät nach einem der vorhergehenden Ansprüche, dadurch gekennzeichnet, daß das Gehäuse (11) einen Sammelbehälter (30) für Niederschlag aufweist, aus dem ein Überlauf in den Bereich des Meßkörpers (35), vorzugsweise des Vlieses (38), führt.

12. Gerät nach einem der vorhergehenden Ansprüche, dadurch gekennzeichnet, daß der Quellkörper (35) aus Holz, vorzugsweise aus Buchenholz, besteht.

— — — — — — — —

FIG.1

III → IV →

15  18

1
2
3
4
5
6
7

19

12

16

17

20

II

21

II

III → IV →

22

23

11

14

13

II

II

FIG.2

15  29  34  14  33  13  30

12

42

36

37

25

32

31

24  41  40  35

39

38

26

27

28

44

43

FIG. 3

FIG. 4

FIG. 6

FIG. 7

FIG.5